# EUROPEAN PATENT APPLICATION

(11) **EP 4 706 479 A1**
(43) Date of publication of application: **11.03.2026**
(21) Application number: 24815764.6
(22) Date of filing: 21.05.2024
(51) Int. Cl.: A47L 9/28, A47L 5/24

(54) **BATTERY AND CLEANER INCLUDING SAME**

(30) Priority: 31.05.2023 KR 20230069905
(71) Applicant: LG Electronics Inc., Yeongdeungpo-gu Seoul 07336 (KR)
(72) Inventor: LIM, Junhyung, Seoul 08592 (KR); HYUN, Kietak, Seoul 08592 (KR); KIM, Hanshin, Seoul 08592 (KR); HAN, Jaehun, Seoul 08592 (KR); HWANG, Inkyu, Seoul 08592 (KR)
(74) Representative: Vossius & Partner Patentanwälte Rechtsanwälte mbB
(86) International application number: PCT/KR2024/006844
(87) International publication number: WO 2024/248387

(57) **Abstract**

The present disclosure relates to a cleaner including a battery, more particularly, to a battery including a protrusion protruding toward one side from the battery body; and a button configured to selectively fix the battery body to the battery receiving part, and is capable of allowing easy operation of the button to release the handle, and allowing the button to be formed compact without protruding outward, and a cleaner including the same.

## Description

### [Technical Field]

The present invention relates to a battery and a cleaner including the same, more particularly, to a mobile vacuum cleaner having improved convenience.

### [Background Art]

In general, a cleaner refers to an electrical appliance that draws in small garbage or dust by sucking air using electricity and fills a dust bin provided in a product with the garbage or dust. Such a cleaner is generally called a vacuum cleaner.

The cleaners may be classified into a manual cleaner which is moved directly by a user to perform a cleaning operation, and an automatic cleaner which performs a cleaning operation while autonomously traveling. Depending on the shape of the cleaner, the manual cleaners may be classified into a canister cleaner, an upright cleaner, a handy cleaner, a stick cleaner, and the like.

The canister cleaners were widely used in the past as household cleaners. However, recently, there is an increasing tendency to use the handy cleaner and the stick cleaner in which a dust bin and a cleaner main body are integrally provided to improve convenience of use.

In the case of the canister cleaner, a main body and a suction port are connected by a rubber hose or pipe, and in some instances, the canister cleaner may be used in a state in which a brush is fitted into the suction port.

The handy cleaner (hand vacuum cleaner) has maximized portability and is light in weight. However, because the handy cleaner has a short length, there may be a limitation to a cleaning region. Therefore, the handy cleaner is used to clean a local place such as a desk, a sofa, or an interior of a vehicle.

A user may use the stick cleaner while standing and thus may perform a cleaning operation without bending his/her waist. Therefore, the stick cleaner is advantageous for the user to clean a wide region while moving in the region. The handy cleaner may be used to clean a narrow space, whereas the stick cleaner may be used to clean a wide space and also used to a high place that the user's hand cannot reach. Recently, modularized stick cleaners are provided, such that types of cleaners are actively changed and used to clean various places.

For example, the cleaners are classified into cleaners using a dry-cleaning method and cleaners using a wet-cleaning method. The wet-cleaning method refers to a method of spraying water or steam to clean a cleaning region, or wiping up the cleaning region with a wet mop. The dry-cleaning method refers to a method of performing a cleaning operation by sucking dust in or rubbing a cleaning region with a brush.

For example, among wet mops, there is a wet mop including a steamer configured to generate steam. The steamer includes a tank which stores water inside, and is configured to vaporize the water stored in the tank so as to generate steam. The steam wet mop supplies steam to the mop so that the the mop can be disinfected by the steam and germs present on the bottom etc. can be sterilized by the steam at a high temperature.

As a patent document 1, Korean Patent No. 10-2021-0024148 is provided. The patent document 1 relates to a cleaner, more particularly, to a cleaner having a cleaning unit capable of compressing dust stored inside a dustbin in a state in which the dustbin is not opened.

According to the patent document 1, a button is disposed at a rear center of a battery, and the user may separate the battery from a battery receiving part by pressing the button.

However, at least some of the button is inserted into an inner side when operated by the user, and a space allowing the button to be inserted thereinto is necessary, thereby causing to dispose the button to protrude outward. Accordingly, there is a disadvantage that the efficient use of the space is difficult.

### SUMMARY

The present disclosure is created to solve the above-mentioned problem, and the problem to be solved by the present disclosure is to provide a cleaner allowing easy operation of a button for separating a handle.

Another problem to be solved by the present disclosure is to provide a cleaner having a battery formed to be compact with a button which does not protrude outward.

The technical problem to be achieved by the present disclosure is not limited to the above-mentioned technical problem, and other technical problems that are not mentioned will be clearly understood by ordinary-skilled persons in the art to which the present disclosure pertains from the following description.

One embodiment is a battery, including: a battery body configured to slide in a first direction to be separably coupled to a battery receiving part of a cleaner and having a cell therein; a protrusion protruding in the first direction from the battery body; and a button allowing at least some thereof to be disposed in the protrusion and configured to selectively fix the battery body to the battery receiving part, and the batterymay be configured to supply electric power to the cleaner.

The first direction may be a forward direction.

At least some of the button may be disposed at a more forward position than the cell.

The protrusion may protrude in a first direction in which the battery is coupled to the battery receiving part. At this time, the button may be disposed in a second direction intersecting the first direction.

The button may include: a pressing part configured to start operation when pressurized by an external force; a hinge disposed at a rear end of the pressing part and rotatably coupled to the battery body; and a hook disposed at a front end of the pressing part and configured to be caught by the battery receiving part. At this time, the hinge may be disposed on an outside of the cell. Alternatively, the hook may be disposed on an outside of the cell during non-operation, and may be disposed on an inner side of the cell during operation. Alternatively, the hinge may be disposed on an outside of the cell in a second direction intersecting the first direction, and the hook may be disposed on an outside of the cell in the first direction.

The button may include: a forward wall extending inward from the pressing part, and the battery body may include: a stopper contacting the forward wall when the button limitedly moves inward.

The battery may further include: an elastic member disposed between the hook and the hinge, and having one end supported by the battery receiving part and another end supporting the button.

The battery may further include: a substrate having a connector, and the protrusion may be provided as a pair, with the connector disposed therebetween.

Another embodiment is a battery, including: a battery body configured to move in forward and rearward directions to be separably coupled to a battery receiving part of a cleaner so as to supply electric power to the cleaner, and having a cell therein; and a button disposed at a front position of the battery body and configured to selectively fix the battery body to the battery receiving part.

The battery may further include: a substrate having a connector, and the button may be provided as a pair on both sides of the battery body, with the connector disposed therebetween.

When the battery body is coupled to the battery receiving part, the button may be disposed adjacent to the cleaner.

The button may include: a pressing part configured to start operation when pressurized by an external force; a hinge disposed at a rear end of the pressing part and rotatably coupled to the battery body; and a hook disposed at a front end of the pressing part and configured to be caught by the battery receiving part.

When viewed from a bottom, the hook may be disposed on an outer side than an outside end of the cell in a fixed state, and the hook may be disposed on an inner side than the outside end of the cell in a released state.

When viewed from a bottom, the hinge may be disposed at a rearer position than a front end of the cell, and the hook may be disposed at a more forward position than the front end of the cell.

The battery may include: a protrusion protruding forward from the battery body, and the button may be disposed on the protrusion.

Still another embodiment is a cleaner, including: a main body forming an external appearance and configured to accommodate main components therein; a battery receiving part disposed on one side of the main body; and a battery configured to slide in a first direction to be separably coupled to the battery receiving part and supply electric power to the main body, and the battery may include: a battery body having a cell therein; a protrusion protruding in the first direction from the battery body; and a button disposed in the protrusion and configured to selectively fix the battery body to the battery receiving part.

Still another embodiment is a cleaner, including: a main body forming an external appearance and configured to accommodate main components therein; a battery receiving part disposed on one side of the main body; and a battery configured to move in forward and rearward directions to be separably coupled to the battery receiving part and supply electric power to the main body. The battery may include: a battery body having a cell therein; and a button disposed at a front position of the battery body and configured to selectively fix the battery body to the battery receiving part.

Details of other embodiments are included in the detailed description and the accompanying drawings.

The battery and the cleaner including the same according to the present disclosure has one or more advantageous effects as below.

First, it is advantageous that the operation of the button to separate the handle is easy, because the buttons are disposed on protrusions protruding forward from the battery body and are disposed on both side surfaces in a direction intersecting an insertion direction of the battery.

Second, it is advantageous that a compact battery with no buttons protruding outward can be formed, because the button is disposed on the protrusion and the hook is disposed on an outer side during non-operation and is disposed on an inner side during operation.

The effects of the present invention are not limited to the above-described effects and other effects which are not described herein may be derived by those skilled in the art from the following description of the embodiments of the present invention.

### BRIEF DESCRIPTION OF THE DRAWINGS

FIG. 1 is a perspective view of a main body of a cleaner according to the present disclosure.
FIG. 2 is a view illustrating a state in which a battery is separated from a main body of a cleaner of FIG. 1.
FIG. 3 is a perspective view of a battery according to the present disclosure.
FIG. 4 is a plan view of a battery of FIG. 3.
FIG. 5 is a view illustrating a state of a battery before being coupled to a main body of a cleaner.
FIG. 6 is a view illustrating a state of a battery after being coupled to a main body of a cleaner.
FIG. 7 is a view illustrating a state after a button is pressurized in FIG. 6.

### DETAILED DESCRIPTION

Hereinafter, exemplary embodiments of the present disclosure will be described in detail with reference to the accompanying drawings.

First, main components of the cleaner 100 will be briefly described.

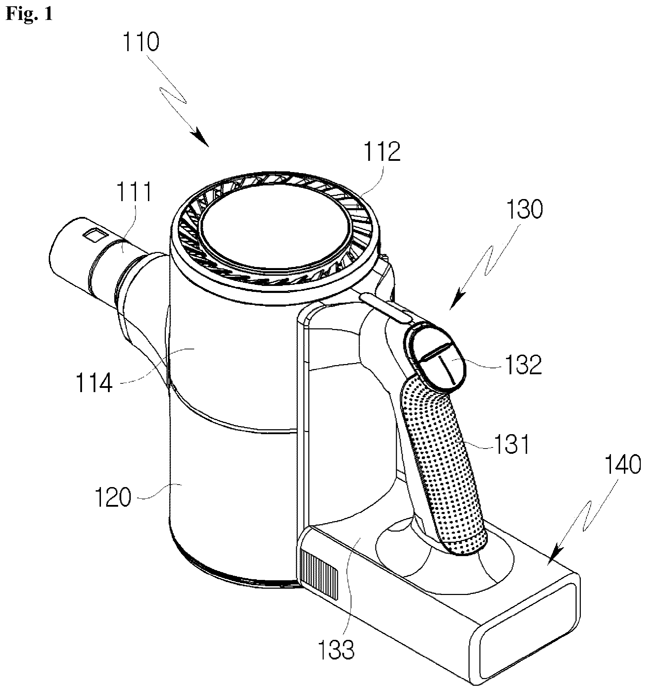

FIG. 1 is a perspective view of a main body of a cleaner according to the present disclosure.

The cleaner 100 may be mean a cleaner being manually operated by the user. For example, the cleaner 100 may mean a handy cleaner, or a stick cleaner.

The cleaner 100 may include a main body 110. The main body 110 includes a suction motor 114 therein, which is configured to provide a suction force during a dry cleaning.

The main body 110 is separably coupled to a cleaning module (not illustrated). In detail, the main body 110 may be directly coupled to the cleaning module (not illustrated), and may be indirectly coupled to the cleaning module through an extension pipe (not illustrated). A suction part 111 of the main body is coupled to the cleaning module (not illustrated) or the extension pipe (not illustrated). For example, the main body 110 may be coupled to the cleaning module (not illustrated) during the dry cleaning, and the main body 110 may be separated from the cleaning module (not illustrated) during the wet cleaning.

When a suction port is formed in the cleaning module (not illustrated), the suction motor 114 provides a suction force to the cleaning module (not illustrated). If the cleaning module is divided into a wet cleaning module (not illustrated) which is illustrated in the drawing, and a dry cleaning module (not illustrated) which is not illustrated in the drawing, the suction motor 114 provides a suction force to the dry cleaning module.

The main body 110 may be connected to the extension pipe (not illustrated). The main body 110 may be connected to the cleaning module (not illustrated) through the extension pipe (not illustrated). During the dry cleaning, the main body 110 may generate a suction force through the suction motor 114, and may provide the suction force to the cleaning module (not illustrated) thtrough the extension piple (not illustrated). In this case, outside dust may be introduced into the main body 110 through the cleaning module (not illustrated) and the extension pipe (not illustrated).

The main body 110 forms an external appearance, and is configured to accommodate main components on its inside. The main body 110 may include the suction part 111, a discharge part 112, a dust separating part (not illustrated), the suction motor 114, and a filter (not illustrated).

The suction part 111 is a hole which allows air containing dust to be introduced into the main body 110 during the dry cleaning.

Referring to FIG. 1, the suction part 111 is coupled to the extension pipe (not illustrated). Alternatively, though not illustrated, the suction part 111 may be directly coupled to the cleaning module (not illustrated).

The discharge part 112 is a hole which allows dust stored inside the main body 110 to be discharged outside during the dry cleaning.

Referring to FIG. 1, the discharge part 112 is formed on an upper surface of the main body 110.

The suction part 111 and the discharge part 112 may be formed in different directions. In detail, the suction part 111 may be formed forward of the main body 110, and the discharge part 112 may be formed upward of the main body 110.

The dust separating part (not illustrated) is communicated with the extension pipe (not illustrated). The dust separating part (not illustrated) may separate the dust sucked thereinto through the extension pipe (not illustrated).

The dust separating part may be communicated with the dustbin 120. In detail, the dust separating part may be disposed inside the dustbin 120. Therefore, the dust separated in the dust separating part is sucked into the dustbin 120, and the air is discharged outside the dust separating part.

The dust separating part may be a cyclone capable of separating dust through the cyclonic flow. Therefore, the air and dust sucked through the extension pipe (not illustrated) spirally flow along an inner peripheral surface of the dust separating part. Accordingly, the cyclonic flow about a center axis of the dust separating part may occur.

The suction motor 114 is configured to generate the suction force with which air is sucked in.

Referring to FIG. 1, the suction motor 114 is accommodated in the main body 110. The suction motor 114 generates the suction force through a rotation.

Referring to FIG. 1, the suction motor 114 is disposed on an upper part of the dustbin 120. Through this configuration, some of the dust contained in the air which is sucked by the suction motor 114 is collected into the dustbin 120 by gravity, and there is an effect that the life expectancy of the suction motor 114 is increased.

Referring to FIG. 1, the suction motor 114 is disposed downstream of the dustbin 120. Through this configuration, the air filtered out in the dustbin 120 passes through the suction motor 114. Therefore, there is an effect that the life expectancy of the suction motor 114 is increased compared to a case in which the suction motor 114 is disposed upstream of the dustbin 120.

A filter (not illustrated) is configured to filter foreign substances contained in the flowing air. The filter may include a pre-filter or a HEPA filter.

The pre-filter is a filter disposed at an uppermost stream among the filters, is formed in a mesh shape, and filters physically big dust primarily. The pre-filter is configured to physically filter dusts bigger than a spacing of the mesh, and is a component which improves a life expectancy of other filters.

The HEPA is the abbreviation for the high efficiency particulate air filter, and is configured to filter fine dust. Generally, the HEPA filter filters fine dust by an electrtostatic force. The HEPA filter filters fine dust contained in the air introduced into the dustbin 120 and prevents the fine dust from being released outside the cleaner 100. The HEPA filter is disposed downstream of the pre-filter, thereby improving the life expectancy.

The filter may be disposed downstream of the suction motor 114. The filter may be disposed upstream or downstream of the suction motor 114. However, referring to FIG. 1, it is preferable that the filter is disposed downstream of the suction motor 114, in other words, on an upper part of the suction motor 114. This is to facilitate replacement of the filter by the user.

The cleaner 100 includes a handle assembly 130. The handle assembly 130 is configured to be gripped by the user.

The handle assembly 130 includes a handle 131 which can be gripped by the user, and and a coupling surface 137 on one side on a front surface thereof.

The handle assembly 130 is coupled to the main body 110 when the main body 110 is coupled to the cleaning module (not illustrated), and is coupled to the cleaning module (not illustrated) when the main body 110 is separated from the cleaning module (not illustrated). In detail, the handle assembly 130 may be coupled to the main body 110, may be coupled to the extension pipe (not illustrated), or may be coupled to the cleaning module (not illustrated).

The handle assembly 130 includes the handle 131 which may be gripped by the user.

The handle assembly 130 includes an operating part 132 configured to provide a command to the cleaning module (not illustrated) or the main body 110.

The handle assembly 130 includes the handle 131, the operating part 132, a battery receiving part 133, and a module coupling part 134.

The handle 131 is formed to be grippable.

The handle 131 according to an embodiment may be formed to be similar to a shape of a cylinder. Alternatively, the handle 131 may be formed in a shape of a bent cylinder.

Meanwhile, in the present embodiment, a virtual handle axis which is formed by extending a center axis of the handle 131 may be formed.

The operating part 132 is configured to receive a command from the user as an input. The operating part 132 is disposed in the handle assembly.

The operating part 132 is disposed on an upper end of the handle 131.

The front end of the operating part 132 may be disposed at an upper position than a rear end of the operating part 132. Through this configuration, the user may press the operating part 132 with a thumb, while gripping the handle.

The battery receiving part 133 is configured to form a space in which the battery is installed. The battery receiving part 133 is coupled to one side of the handle 131, and the battery is installed 140 therein.

The battery receiving part 133 is disposed on one side of the main body 110. In detail, the battery receiving part 133 may be disposed on an outside surface of the main body 110.

The battery receiving part 133 is disposed below the handle 131.

The battery receiving part 133 is opened on its lower part, and the battery 140 may move from a rearward direction to a forward direction so that the battery 140 is inserted into the battery receiving part 133.

The battery 140 is configured to supply electric power to each of the components of the cleaner 100, including the suction motor 114.

The battery 140 is separably coupled to the battery receiving part 133, and supplies electric power to the main body 110. That is, the battery 140 is coupled to the battery receiving part 133 and is electrically connected to the components of the cleaner 100 which are disposed inside the cleaner, such as the suction motor 114.

In detail, a substrate 147, which is electrically connected to a cell 146, is disposed in the battery 140. In addition, the battery 140 has a connector 147a, which is electrically connected to the cleaner 100 when the battery 140 is coupled to the battery receiving part 133. The cell 146 and the substrate 147 are electrically connected to the connector 147a.

Therefore, when the battery 140 is coupled to the battery receiving part 133, the battery may supply electric power to the components of the cleaner 100 and transmit or receive command signals to or from the components.

Referring to FIG. 1, the battery 140 is disposed below the handle 131.

For example, the battery 140 may be separably coupled to the cleaner 100. The battery 140 may be inserted into the cleaner 100 in an upward direction to be mounted and may be detached therefrom in a downward direction.

The battery 140 may be disposed at a rear of the dustbin 120. That is, the suction motor 114 and the battery 140 may be disposed in a way not to overlap in a vertical direction, and the arrangement height may be different. Based on the handle 131, the suction motor 114 which is heavier is disposed at a front of the handle 131, and the battery 140 which is heavier is disposed below the handle 131, therefore, the overall weight of the cleaner may be evenly distributed. Through this configuration, when the user performs the cleaning operation while holding the handle 131, injuries to the wrist of the user may be prevented.

A coupling structure through which the battery is mounted on or detached from the battery receiving part 133 will be described below.

The handle assembly 130 includes the module coupling part 134. The module coupling part 134 is a part through which the handle assembly 130 is connected to the cleaning module (not illustrated).

A coupling surface 137 is a surface on which the cleaning module (not illustrated), the extension pipe (not illustrated), brackets (170, 180) etc. are coupled to the cleaner 100.

Referring to FIG. 1, the module coupling part 134 is formed in front of the handle assembly 130.

The cleaner 100 may include the dustbin 120. The dustbin 120 may be communicated with the dust separating part (not illustrated). The dustbin 120 may store therein dust which is separated in the dust separating part.

A lower surface of the dustbin 120 may form an opening and some of the opening may be opened. The dustbin 120 may include a discharge cover configured to open or close the opened lower surface.

The discharge cover (not illustrated) is configured to cover the opened lower surface of the dustbin 120. The dustbin 120 collects dust inside the dustbin 120 when the cleaner 100 is operated, and discharges dust only as needed, after ending the operation of the cleaner 100.

The discharge cover may be disposed on the lower surface of the dustbin 120. The discharge cover may selectively open or close the lower surface of the dustbin 120 which is opened downward.

Referring to FIG. 1, when viewed from the front, the dustbin 120 is disposed on the center axis of the main body.

Referring to FIG. 1, the cleaner 100 includes the extension pipe (not illustrated). The extension pipe (not illustrated) is configured to guide air, which is sucked by the cleaning module (not illustrated), to the main body 110.

A front end of the extension pipe (not illustrated) is coupled to the cleaning module (not illustrated), and a rear end thereof is selectively coupled to either of the main body 110 or the handle assembly 130.

One end of the extension pipe (not illustrated) is communicated with the cleaning module (not illustrated), and another end thereof is communicated with the main body 110. The extension pipe (not illustrated) may be communicated with the suction part 111 of the main body 110. The extension pipe (not illustrated) may be formed to have a long cylindrical shape.

The battery 140 may include a battery body 141, a protrusion 142, and a button 143.

The battery body 141 forms an external appearance of the battery 140, and forms a space allowing other components to be received inside.

The battery body 141 may be formed to have a shape similar to a cuboid, but is not necessarily limited thereto.

Inside the battery body 141, the cell 146 is provided.

Some of the upper surface of the battery body 141 may form a groove which is recessed downward. Into the groove, the upper surface of the battery receiving part 133 may be inserted. In detail, the battery receiving part 133 which will be described below may be inserted into the groove of the battery body 141. Through this configuration, the battery 140 may be stably coupled to the battery receiving part 133.

The protrusion 142 may protrude toward one side from the battery body 141.

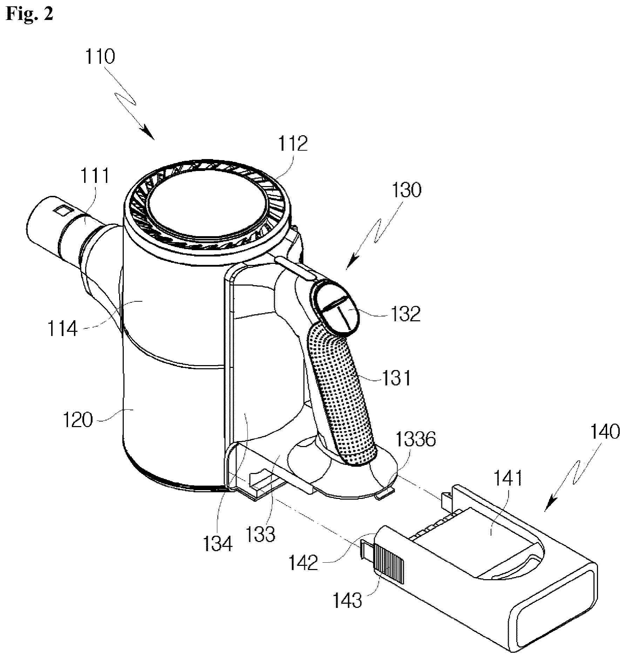

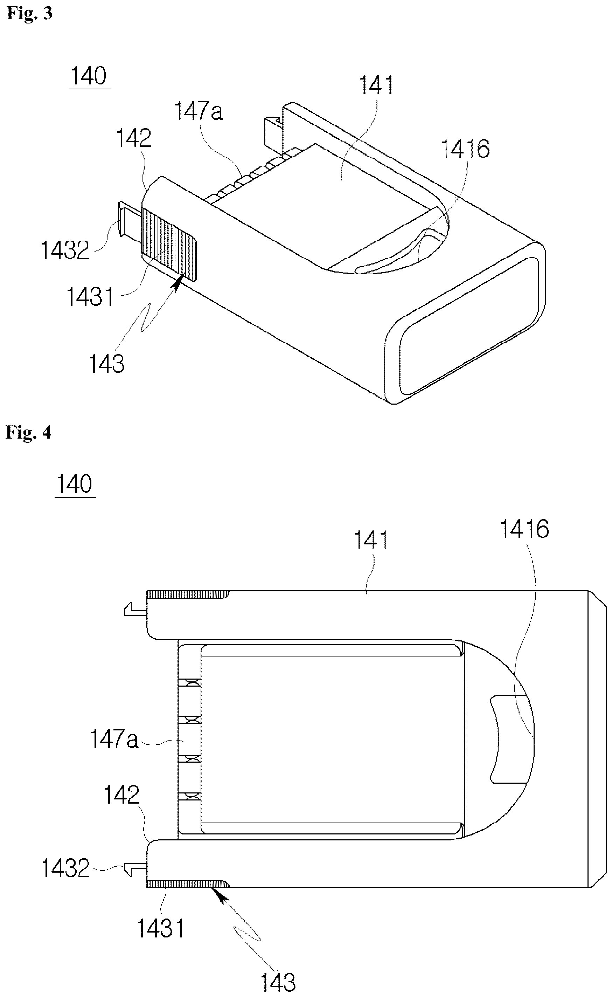

Referring to FIGS. 2 and 3, the protrusion 142 protrudes forward.

The protrusion 142 may protrude as a pair disposed on the left and the right. In detail, the protrusions may protrude forward from a left end and a right end of the battery body 141. That is, the protrusions are formed to protrude forward from a forward end surface of the battery body 141.

By having the protrusion 142 formed, the battery body 141 is formed to have a U-shape which is opened in the forward direction when viewed from the top.

The button 143 is configured to fix the battery 140 to the battery receiving part 133 or separate the battery 140 from the battery receiving part 133. At least some of the button 143 is disposed on the protrusion 142, and the button selectively fixes the battery body 141 to the battery receiving part 133.

In detail, referring to FIG. 4, at least some of the button 143 is disposed on the protrusion 142, and the rest thereof may be disposed on the battery body 141.

Referring to FIG. 3, the button 143 is disposed on the protrusion 142. According to the present disclosure, as the button 143 is inserted into the inside of the battery body 141, the button 143 is released from the battery receiving part 133. At this time, a free space should be formed on an inside of the button 143 so that the button 143 can be inserted thereinto, and because of this, the button 143 could not help but protruding outward of the battery body 141 in the prior art. However, according to the present disclosure, as the button 143 is disposed on the protrusion 142, the outside end of the button 143 can be disposed on the same surface as the side surface of the battery body 141, and the shape of the battery 140 can be more compact. In addition, when the battery 140 is coupled to the battery receiving part 133, the button 143 is disposed adjacent to the main body 110.

The protrusion 142 protrudes in a first direction in which the battery 140 is coupled to the battery receiving part 133. That is, the protrusion 142 protrudes in the first direction in which the battery 140 is slidingly coupled to the battery receiving part 133. Referring to FIG. 2, the first direction in which the battery 140 is coupled to the battery receiving part 133 is a forward direction, and the protrusion 142 protrudes in the forward direction. Through this configuration, an area in which the battery 140 and the battery receiving part 133 contact each other increases, and thus, there is an effect that the battery 140 is supported on the battery receiving part 133 more stably.

The button 132 is disposed in a second direction which intersects the first direction. Referring to FIG. 3, the second direction is a side direction, and the button 143 is disposed in the side direction from the battery body 141. In other words, the button 142 is disposed on a left side surface or a right side surface of the battery body 141. Through this configuration, the user may separate the battery 140 easily from the battery body 141 by pressing the button 143 in a state in which the user holds the battery 140 with one hand.

The button 143 may consist of a pressing part 1431, a hinge 1433, and a hook 1432.

The pressing part 1431 is configured to operate the button 143. The pressing part 1431 starts the operation when pressurized by the external force.

The pressing part 1431 has wide left side surface and right side surface, and a front surface, a rear surface, an upper surface, and a lower surface of the pressing part 1431 may be formed to have a narrow plate shape.

The pressing part 1431 may configure some of the external appearance of the battery 140. In detail, a hole may be formed on some of the left side surface or on some of the right side surface of the battery body 141, and the pressing part 1431 may be disposed on the hole.

The hinge 1433 is configured to serve as a reference for rotating the button 143. The hinge 1433 is disposed on a rear end of the pressing part 1431, and is rotatably coupled to the battery body 141.

The hinge 1433 is disposed on a hinge groove 1413 formed in the battery body 141.

The hinge 1433 is disposed on the center axis for rotating the button 143.

The hinge 1433 may be formed by extending toward an inner side or rearward from a rear end of the pressing part 1431.

The hinge 1433 extends in forward and rearward directions, and may configure the center axis for rotating the button 143.

The hook 1432 is configured to fix the battery 140 to the battery receiving part 133. The hook 1432 is disposed on a front end of the pressing part 1431, and is caught by the battery receiving part 133.

The hook 1432 protrudes forward from the front end of the pressing part 1431. That is, the hook 1432 is disposed at the frontmost position of the button 143. The hook 1432 is disposed at a more forward position than the front end of the battery body 141.

The hook 1432 is formed in a shape of a wedge, and may be fixed by being caught by a hook catching hole 1332 formed in the battery receiving part 133.

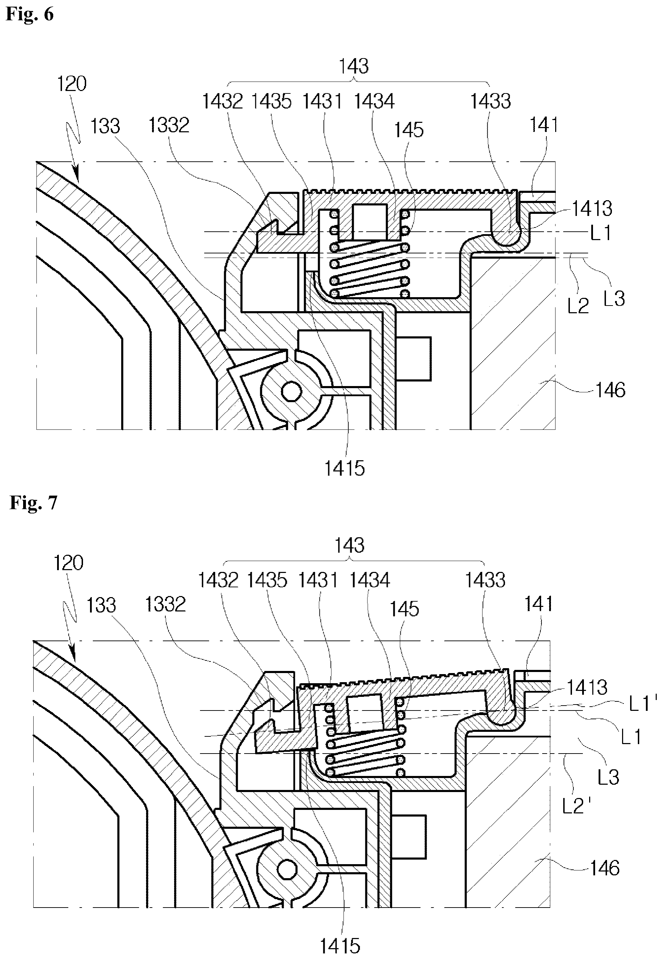

The hinge 1433 is disposed outside the cell 146. Referring to FIG. 6, a virtual line passing through the hinge 1433 is L1, and a virtual line passing through the outside end of the cell 146 is L3. The hinge 1433 is disposed on the outside of the cell 146. Through this configuration, though the button 143 is disposed outside the cell 146 when it is not operated, but the button 143 may move inward of the cell 146 when it is operated.

The hook 1432 is disposed outside the cell 146 when it is not operated, and disposed on an inner side of the cell 146. In other words, when viewed from a bottom, the hook 1432 is disposed on an outer side than the outside end of the cell 146 when the hook 1432 is fixed, and the hook 1432 is disposed on an inner side than the outside end of the cell 146 when the hook 1432 is released. L2 and L2' are virtual straight lines which pass through an inner side end of the hook 1432. Referring to FIG. 6, L2 is positioned outside L3, therefore, it may be considered that the hook 1432 is disposed outside the cell 146 when the hook 1432 is not operated. However, referring to FIG. 7, L2' is disposed on an inner side of L3, therefore, it may be considered that the hook 1432 is disposed on an inner side of the cell 146 when the hook 1432 is operated. Through this configuration, it is possible to secure the miminum space for the button 143 to move for release, and a space of the battery 140 may be efficiently secured.

When a direction in which the battery 140 is coupled to the battery receiving part 133 is the first direction, the hinge 1433 is disposed outside the cell 146 in the second direction which intersects the first direction, and the hook 1432 is disposed outside the cell 146 in the first direction. As described above, the first direction is a foward direction, and the second direction is a side direction. That is, the hinge 1433 is disposed in a direction more toward a left side than a left side end of the cell 146, and disposed in a direction more toward a right side than a right side end of the cell 146. The hook 1432 is disposed at a more forward position than a front end of the cell 146. Through this configuration, the battery 140 is disposed outside the cell 146 when the button is not operated, and the hook 1432 is inserted into a space formed in front of the cell 146, which is a space inside the protrusion 142, thereby having an advantage of designing a length of the battery 140 in the left and right directions to be minimized.

The battery 140 includes an elastic member 145.

The elastic member 145 is configured to restore the button 143 to its original position when the button 143 moves.

The elastic member 145 is disposed between the hook 1432 and the hinge 1433, and one end thereof is supported by the battery receiving part 133 and the other end thereof supports the button 143.

Referring to FIG. 6, an outside end of the elastic member 145 comes into close contact with an inner surface of the pressing part 1431 and supports the pressing part 1431, and an inside end of the elastic member 145 comes into close contact with the battery body 141 and is supported by the battery body 141.

The elastic member 145 may be a flat spring and a compression spring.

The button 143 may further include an elastic member holder 1434 which protrudes in an inside direction from an inner surface of the pressing part 1431 and which is inserted into the elastic member 145. The elastic member holder 1434 fixes a position of the elastic member 145.

The button 143 includes a front wall 1435, and the battery body 141 includes a stopper 1415. As the front wall 1435 is supported by the stopper 1415, the movement by more than a limited distance is limited.

The front wall 1435 and the stopper 1415 are spaced apart when the button 143 is not operated. The front wall 1435 and the stopper 1415 may come into close contact with each other when the button 143 is operated.

The front wall 1435 extends inward from the pressing part 1431. Referring to FIG. 6, the front wall 1435 extends inward from the front end of the pressing part 1431.

The hook 1432 may protrude forward from the front wall 1435. The hook 1432 may protrude forward from an inside end of the front wall 1435.

The stopper 1415 is formed on the battery body 141. The stopper 1415 comes into contact with the front wall when the button 143 is limitedly moved inward.

The battery receiving part 133 includes a rear catching projection 1336, and the battery 140 includes a rear catching hole 1416.

The rear catching projection 1336 is formed in the battery reciving part 133, and protrudes in a reverse direction of a direction in which the battery 140 is inserted thereinto. Referring to FIG. 2, the rear catching projection 1336 protrudes rearward from a lower end of the battery reciving part 133.

The rear catching hole 1416 is formed in the battery 140, and at least some of the rear catching projection 1336 is inserted into the rear catching hole 1416. Referring to FIGS. 2 and 3, the rear catching hole 1416 may be formed to be recessed downward and rearward from an upper surface of the battery 140.

Referring to FIGS. 1 to 3, after the rear catching projection 1336 is caught by the rear catching hole 1416, the hook 1432 is caught by the hook catching hole 1332, thereby the battery 140 is coupled to the battery receiving part 133.

Hereinafter, fix and release of the battery 140 according to the present disclosure will be described.

Referring to FIGS. 1 and 2, the user may couple the battery 140 to the battery receiving part 133 by holding the battery 140 and pushing the battery 140 forward at a rear of the battery receiving part 133. At this time, the rear catching projection 1336 of the battery receiving part 133 is caught by the rear catching hole 1416 of the battery 140, and the hook 1432 of the button 143 is caught by the hook catching hole 1332 of the battery receiving part 133, thereby the battery 140 is coupled to the battery receiving part 133.

Referring to FIGS. 1 and 2, the user may detach the battery 140 from the battery receiving part 133 by holding the battery 140 and pulling the battery 140 in a rearward direction from the forward direction. Referring to FIGS. 6 and 7, the user may detach the battery 140 by holding the battery 140 with one hand and pressing the pressing part 1431 of the button 143. In detail, when the pressing part 1431 is pressurized, the button 143 is rotated about the hinge 1433 and is inserted inward, and the hook 1432 is released from the hook catching hole 1332, thereby the battery 140 is detached.

According to the present disclosure, as the button 143 is disposed on the protrusion 142, more particularly, the hook 1432 of the button 143 is disposed on the protrusion 142, there is an effect of securing a space in which the button 143 can move and reducing a width of the battery in left and right directions. In addition, the hinge 1433 is disposed outside the cell 146, the hook 1432 is disposed outside the cell 146 when the button 143 is not operated, and the hook 1432 is disposed inside the cell 146 when the button 143 is operated, there is also an effect of reducing a width of the battery in the left and right directions.

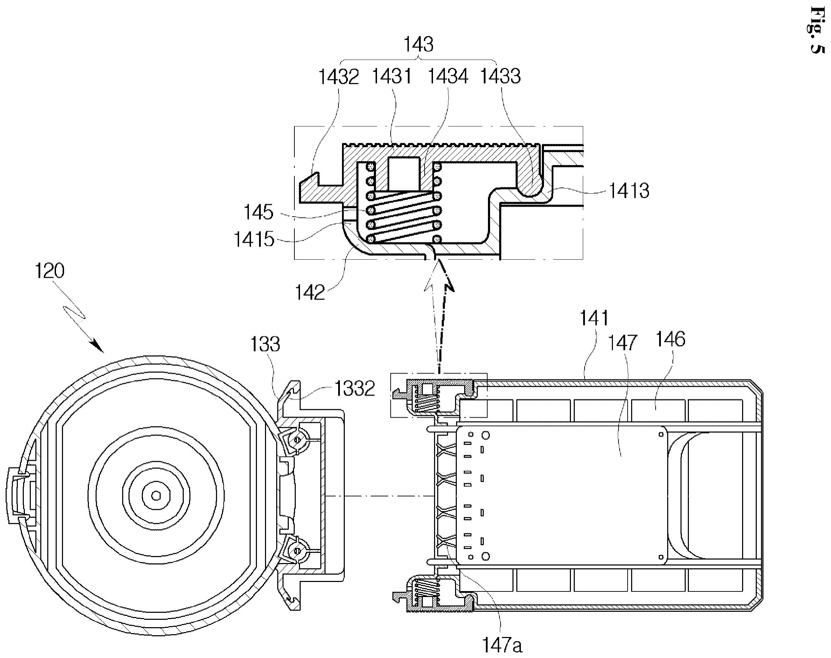

In addition, referring to FIG. 5, the substrate 147 is disposed on an upper part of the cell 146 inside the battery body 141, and a front end thereof is disposed between the protrusions 142. Further, the substrate 147 has a connector 147a, which is electrically connected to the main body 110, supplies electric power, and sends and receives signals.

Moreover, the connector 147a is disposed between the protrusions 142, and is disposed between the buttons 143.

While the present disclosure has been described with reference to the specific embodiments, the specific embodiments are only for specifically explaining the present disclosure, and the present disclosure is not limited to the specific embodiments. It is apparent that the present disclosure may be modified or altered by those skilled in the art without departing from the technical spirit of the present disclosure.

All the simple modifications or alterations to the present disclosure fall within the scope of the present disclosure, and the specific protection scope of the present disclosure will be defined by the appended claims.

## Claims

1. A battery (140), comprising:
a battery body (141) configured to slide in a first direction to be separably coupled to a battery receiving part (133) of a cleaner (100) and having a cell (146) therein;
a protrusion (142) protruding in the first direction from the battery body (141);
and
a button (143) allowing at least some thereof to be disposed in the protrusion (142) and configured to selectively fix the battery body (141) to the battery receiving part (133),
wherein the battery (140) is configured to supply electric power to the cleaner (100).

2. The battery (140) of claim 1,
wherein the first direction is a forward direction.

3. The battery (140) of claim 1,
wherein the button (143) is disposed in a second direction intersecting the first direction.

4. The battery (140) of claim 1,
wherein at least some of the button (143) is disposed at a more forward position than the cell (146).

5. The battery (140) of claim 1,
wherein the button (143) comprises:
a pressing part (1431) configured to start operation when pressurized by an external force;
a hinge (1433) disposed at a rear end of the pressing part (1431) and rotatably coupled to the battery body (141); and
a hook (1432) disposed at a front end of the pressing part (1431) and configured to be caught by the battery receiving part (133).

6. The battery (140) of claim 5,
wherein the hinge (1433) is disposed on an outside of the cell (146).

7. The battery (140) of claim 5,
wherein the hook (1432) is disposed on an outside of the cell (146) during non-operation, and is disposed on an inner side of the cell (146) during operation.

8. The battery (140) of claim 5,
wherein the hinge (1433) is disposed on an outside of the cell (146) in a second direction intersecting the first direction, and
wherein the hook (1432) is disposed on an outside of the cell (146) in the first direction.

9. The battery (140) of claim 5, further comprising:
an elastic member (145) disposed between the hook (1432) and the hinge (1433), and having one end supported by the battery receiving part (133) and another end supporting the button (143).

10. The battery (140) of claim 5,
wherein the button (143) comprises:
a forward wall (1435) extending inward from the pressing part (1431), and
wherein the battery body (141) comprises:
a stopper (1415) contacting the forward wall (1435) when the button (143) limitedly moves inward.

11. The battery (140) of claim 1, further comprising:
a substrate (147) having a connector (147a),
wherein the protrusion (142) is provided as a pair, with the connector (147a) disposed therebetween.

12. A battery (140), comprising:
a battery body (141) configured to move in forward and rearward directions to be separably coupled to a battery receiving part (133) of a cleaner (100) so as to supply electric power to the cleaner (100), and having a cell (146) therein; and
a button (143) disposed at a front position of the battery body (141) and configured to selectively fix the battery body (141) to the battery receiving part (133).

13. The battery (140) of claim 12, further comprising:
a substrate (147) having a connector (147a),
wherein the button (143) is provided as a pair on both sides of the battery body (141), with the connector (147a) disposed therebetween.

14. The battery (140) of claim 12,
wherein when the battery body (141) is coupled to the battery receiving part (133), the button (143) is disposed adjacent to the cleaner (100).

15. The battery (140) of claim 12,
wherein the button (143) comprises:
a pressing part (1431) configured to start operation when pressurized by an external force;
a hinge (1433) disposed at a rear end of the pressing part (1431) and rotatably coupled to the battery body (141); and
a hook (1432) disposed at a front end of the pressing part (1431) and configured to be caught by the battery receiving part (133).

16. The battery (140) of claim 15,
wherein when viewed from a bottom, the hook (1432) is disposed on an outer side than an outside end of the cell (146) in a fixed state, and the hook (1432) is disposed on an inner side than the outside end of the cell (146) in a released state.

17. The battery (140) of claim 15,
wherein when viewed from a bottom, the hinge (1433) is disposed at a rearer position than a front end of the cell (146), and the hook (1432) is disposed at a more forward position than the front end of the cell (146).

18. The battery (140) of claim 12,
wherein the battery body (141) comprises:
a protrusion (142) protruding forward from the battery body (141), and
wherein the button (143) is disposed on the protrusion (142).

19. A cleaner (100), comprising:
a main body (110) forming an external appearance and configured to accommodate main components therein;
a battery receiving part (133) disposed on one side of the main body (110); and
a battery (140) configured to slide in a first direction to be separably coupled to the battery receiving part (133) and supply electric power to the main body (110),
wherein the battery (140) comprises:
a battery body (141) having a cell (146) therein;
a protrusion (142) protruding in the first direction from the battery body (141);
and
a button (143) disposed in the protrusion (142) and configured to selectively fix the battery body (141) to the battery receiving part (133).

20. A cleaner (100), comprising:
a main body (110) forming an external appearance and configured to accommodate main components therein;
a battery receiving part (133) disposed on one side of the main body (110); and
a battery (140) configured to move in forward and rearward directions to be separably coupled to the battery receiving part (133) and supply electric power to the main body (110),
wherein the battery (140) comprises:
a battery body (141) having a cell (146) therein; and
a button (143) disposed at a front position of the battery body (141) and configured to selectively fix the battery body (141) to the battery receiving part (133).
